# EUROPEAN PATENT APPLICATION

(11) **EP 4 625 119 A1**
(43) Date of publication of application: **01.10.2025**
(21) Application number: 23894169.4
(22) Date of filing: 06.07.2023
(51) Int. Cl.: G06F 3/0338

(54) **POINTING DEVICE**

(30) Priority: 22.11.2022 JP 2022186564
(71) Applicant: Minebea Mitsumi Inc., Kitasaku-gun, Nagano 3890293 (JP)
(72) Inventor: MORI Masao, Kitasaku-gun, Nagano 389-0293 (JP); KASHINO Takashi, Kitasaku-gun, Nagano 389-0293 (JP)
(74) Representative: Winter, Brandl - Partnerschaft mbB
(86) International application number: PCT/JP2023/025081
(87) International publication number: WO 2024/111153

(57) **Abstract**

A pointing device (100) detecting at least an operation amount in a first direction and an operation amount in a second direction orthogonal to the first direction includes a flexure element (11) extending in a plane including the first direction and the second direction and having a plate shape, an operation part (12) operated by an operator and extending from the flexure element to one side in a third direction orthogonal to the first direction and orthogonal to the second direction, three legs (131, 132, and 133) extending from the flexure element to the other side in the third direction and fixed to a support supporting the flexure element, a first strain gauge (SG_{X1}, SG_{X2}) attached to the flexure element and configured to detect the operation amount in the first direction, and a second strain gauge (SG_{Y1}, SG_{Y2}) attached to the flexure element and configured to detect the operation amount in the second direction. In the pointing device, the flexure element has a triangular shape when viewed in the third direction, and the three legs are provided at respective three top parts (V1, V2, and V3) of the flexure element.

## Description

### Technical Field

The present invention relates to a pointing device.

### Background Art

A pointing device including a rod-shaped operation part is known as one type of an input device detecting an operation amount by an operator and inputting the operation amount to an electronic device (that is, an operation target) such as a notebook computer or a game machine. The pointing device usually has a rod-shaped operation part and a flexure part connected to the operation part, and detects an operation amount by the operator based on a strain generated in the flexure part when the operator operates the operation part.

Patent Document 1 discloses a pointing device including a stick operated by an operator, a flexible stick support part connected to a lower end part of the stick, and three protruding parts for fixing the flexible stick support part to a support member. In Patent Document 1, the flexible stick support part is a member having a circular shape in a plan view and functioning as a flexure element.

### Citation List

### Patent Literature

Patent Document 1: JP 5285001 B

### Summary of Invention

### Technical Problem

As electronic devices such as notebook computers and game machines become smaller, there is an increasing demand for a compact pointing device capable of being efficiently arranged within the electronic device.

In response to this, an object of the present invention is to provide a compact pointing device.

### Solution to Problem

According to an aspect of the present invention, a pointing device detecting at least an operation amount in a first direction and an operation amount in a second direction orthogonal to the first direction is provided.

The pointing device includes:
a flexure element extending in a plane including the first direction and the second direction and having a plate shape;
an operation part operated by an operator and extending from the flexure element to one side in a third direction orthogonal to the first direction and orthogonal to the second direction;
three legs extending from the flexure element to the other side in the third direction and fixed to a support supporting the flexure element;
a first strain gauge attached to the flexure element and configured to detect the operation amount in the first direction;
a second strain gauge attached to the flexure element and configured to detect the operation amount in the second direction.

The flexure element has a triangular shape when viewed in the third direction, and
the three legs are provided at respective three top parts of the flexure element.

### Advantageous Effects of Invention

The pointing device of the present invention is compact and can be compactly arranged in a device as an attachment target of the pointing device of the present invention, such as an electronic device.

### Brief Description of Drawings

FIG. 1 is an exploded perspective view of a pointing device according to an embodiment.
FIG. 2 is a perspective view of the pointing device according to the embodiment.
FIG. 3(a) is a top view of a main body part and a strain sensor. FIG. 3(b) is a bottom view of the main body part and the strain sensor.
FIG. 4(a) is a plan view of the pointing device according to the embodiment. FIG. 4(b) is a cross-sectional view taken along line IVb-IVb in FIG. 4(a). FIG. 4(c) is a cross-sectional view taken along line IVc-IVc in FIG. 4(a).
FIG. 5(a) is a cross-sectional view of a pointing device according to a modification. The cross-sectional position is a position corresponding to line IVc-IVc in FIG. 4(a). FIG. 5(b) is a cross-sectional view of a pointing device according to another modification. The cross-sectional position is a position corresponding to line IVc-IVc in FIG. 4(a).

### Description of Embodiments

### Embodiments

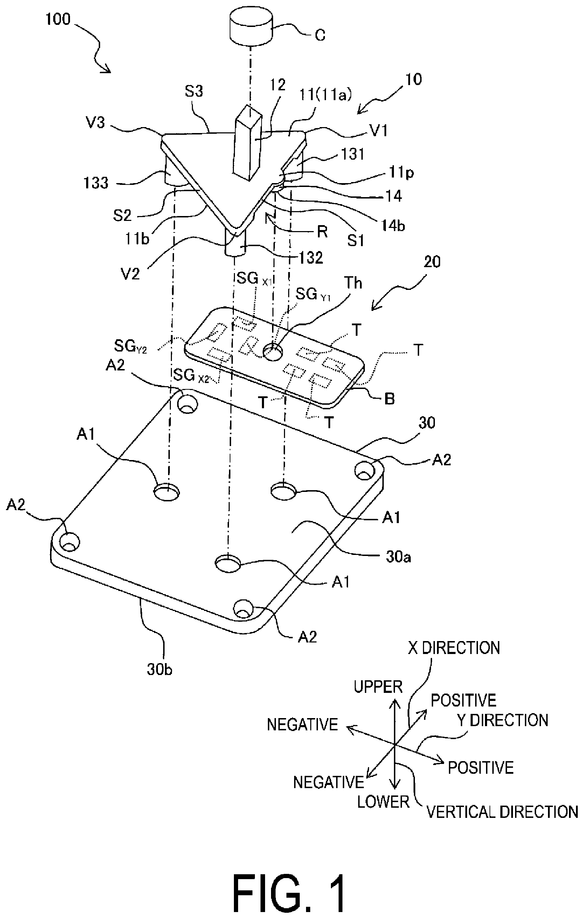

A pointing device 100 according to an embodiment of the present invention will be described with reference to FIG. 1 to FIG. 4.

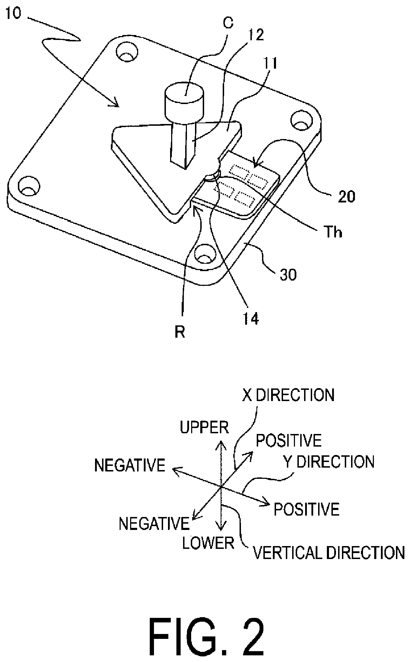

As illustrated in FIGS. 1 and 2, a pointing device 100 according to the present embodiment is a pointing stick assembly (PSA) including a columnar operation part 12. The pointing device 100 mainly includes a main body 10, a strain sensor 20 for detecting strain generated in the main body 10, and a support plate 30 for supporting the main body 10.

In the following description, a direction of arranging the main body 10, the strain sensor 20, and the support plate 30 is defined as a vertical direction. In the vertical direction, a side with the main body 10 positioned with respect to the support plate 30 is defined as an upper side, and a side with the support plate 30 positioned with respect to the main body 10 is defined as a lower side. One direction extending in a plane orthogonal to the vertical direction is defined as an X direction, and a direction extending in a plane orthogonal to the vertical direction and orthogonal to the X direction is defined as a Y direction. In the present embodiment, for convenience of description, as illustrated in FIG. 1, a direction of one side of the square support plate 30 is defined as the X direction, and a direction of the other side orthogonal to the one side is defined as the Y direction. In the present embodiment, for convenience of description, the positive side and the negative side of the X direction and the Y direction are defined as illustrated in FIG. 1. However, the X direction and the Y direction are not limited to the example of FIG. 1. The X direction, the Y direction, and the vertical direction are examples of a first direction, a second direction, and a third direction in the present invention, respectively.

The main body 10 is formed of, for example, a resin. The main body 10 may be formed by integral molding.

The main body 10 includes a flexure element 11, the operation part 12, three legs (i.e., a first leg 131, a second leg 132, and a third leg 133), and a protruding part 14.

The flexure element 11 is a substantially flat plate extending in a plane including the X direction and the Y direction. The flexure element 11 has a triangular shape in a plan view (i.e., when viewed in the vertical direction) and includes a first top part V1, a second top part V2, and a third top part V3, and a first side S1, a second side S2, and a third side S3. In the present embodiment, the first top part V1, the second top part V2, and the third top part V3 are rounded in a plan view but are not limited to this shape.

The first top part V1 and the second top part V2 are arranged in the X direction. The first side S1 extends parallel to the X direction. A perpendicular line from the third top part V3 to the first side S1 extends parallel to the Y direction. In the present embodiment, lengths of the second side S2 and the third side S3 are equal to each other, and the first side S1 is longer than the second side S2 and the third side S3. That is, the shape of the flexure element 11 in a plan view is an isosceles triangle.

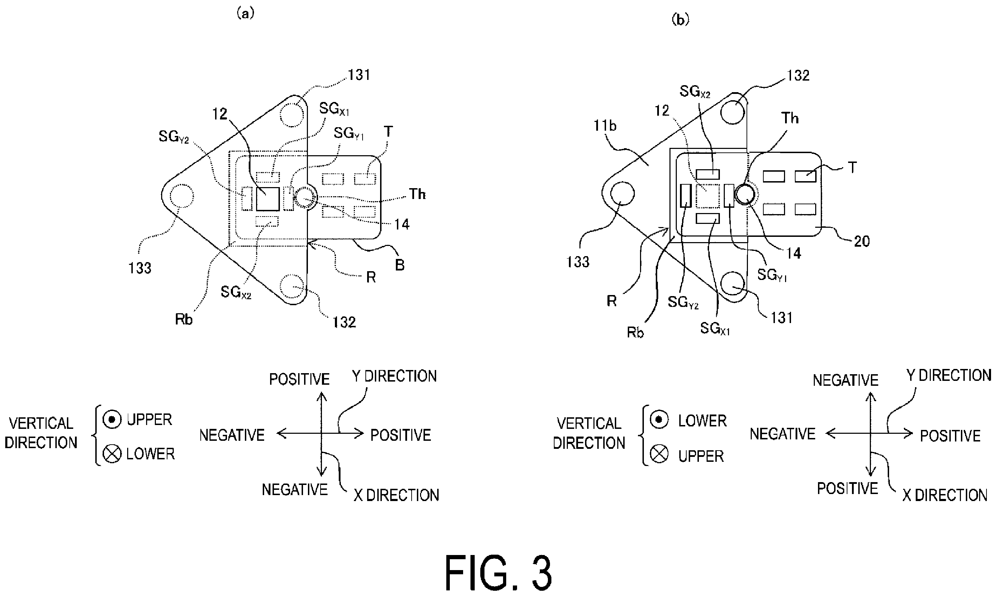

A protrusion 11p having a semicircular shape in a plan view and protruding from the first side S1 to the positive side in the Y direction is provided at a central part of the first side S1 of the flexure element 11. A recessed part R (see FIGS. 3(a) and 3(b)) having a rectangular shape in a plan view is provided in a lower surface 11b of the flexure element 11. The recessed part R need not be provided in the lower surface 11b.

The operation part 12 is a part operated by a user of the pointing device 100 (i.e., a part for receiving force applied by the user). The operation part 12 is provided on an upper surface 11a of the flexure element 11.

The operation part 12 is a prism extending in the vertical direction. A lower surface of the operation part 12 is fixed to the upper surface 11a of the flexure element 11. A connection position of the operation part 12 to the flexure element 11 is not particularly limited. For example, the operation part 12 is fixed at a positive side with respect to a central part of the flexure element 11 in the Y direction. The operation part 12 may be fixed to a position of the center of gravity of the flexure element 11 in a plan view. In the present embodiment, the operation part 12 is disposed so that respective four side surfaces of the operation part face the positive side in the X direction, the negative side in the X direction, the positive side in the Y direction, and the negative side in the Y direction. However, the orientations of the four side surfaces of the operation part 12 are not limited to the above-described orientations. For example, each of the four side surfaces of the operation part 12 may face a direction inclined by 45 degrees from the above-described direction in a plan view (that is, in the XY plane).

A cap C is attached to an upper end part of the operation part 12. The cap C is a part directly touched by the operator of the pointing device 100 in order to operate the pointing device 100. The cap C may be made of rubber, for example.

Each of the first leg 131, the second leg 132, and the third leg 133 is a support leg fixed to the support plate 30 and supporting the flexure element 11. The first leg 131 is provided at the first top part V1 of the flexure element 11, the second leg 132 is provided at the second top part V2 of the flexure element 11, and the third leg 133 is provided at the third top part V3 of the flexure element 11.

The first leg 131 and the second leg 132 are located at the same position in the Y direction. That is, the first leg 131 and the second leg 132 are aligned in the X direction. The third leg 133 is located at a center position between the first leg 131 and the second leg 132 in the X direction. That is, a distance between the first leg 131 and the third leg 133 in the X direction is equal to a distance between the second leg 132 and the third leg 133 in the X direction. The third leg 133 is located at the negative side of the first leg 131 and the second leg 132 in the Y direction.

Each of the first leg 131, the second leg 132, and the third leg 133 is a columnar leg extending downward from the lower surface 11b of the flexure element 11. In the present embodiment, upper surfaces of the first leg 131 to the third leg 133 are formed integrally with the lower surface 11b of the flexure element 11. The first leg 131 to the third leg 133 may be formed separately from the flexure element 11 and then fixed to the flexure element 11 with an adhesive or the like.

One side of the flexure element 11 is formed with the protrusion 11p protruding in a plan view. The protruding part 14 having a columnar shape extends downward from the lower surface 11p including a lower surface of the protrusion 11p. The protruding part 14 is configured to adjust an amount of strain of the flexure element 11 by bringing a lower end part into contact with the support plate 30.

In the present embodiment, an upper surface of the protruding part 14 is formed integrally with the lower surface 11b. The protruding part 14 may be formed separately from the flexure element 11 and then fixed to the lower surface 11p including the lower surface of the protrusion 11p with an adhesive or the like. The protruding part 14 is located at the positive side of the first leg 131 and the second leg 132 in the Y direction.

In the present embodiment, the protrusion 11p is located at a center position between the first leg 131 and the second leg 132 in a plan view. Therefore, the protruding part 14 is also located at the center position between the first leg 131 and the second leg 132, and a distance between the first leg 131 and the protruding part 14 in the X direction is equal to a distance between the second leg 132 and the protruding part 14 in the X direction. The protruding part 14 is located at the same position as the third leg 133 in the X direction. In other words, the protruding part 14 and the third leg 133 are aligned in the Y direction.

A length of the protruding part 14 in the vertical direction (that is, a length of the column in the axial direction) is shorter than lengths of the first leg 131, the second leg 132, and the third leg 133 in the vertical direction.

The strain sensor 20 is attached to the flexure element 11 with an adhesive or the like. In the present embodiment including the recessed part R, the strain sensor 20 is attached to a bottom surface Rb of the recessed part R of the lower surface 11b. In an aspect where the recessed part R is not provided in the lower surface 11b, the strain sensor 20 is attached to the lower surface 11b. The strain sensor 20 includes a base material B, four strain gauges provided on a surface of the base material B (i.e., strain gauges SG_{X1}, SG_{X2}, SG_{Y1}, and SG_{Y2}), and four tabs T provided on the surface of the base material B.

The base material B is, for example, a flexible sheet formed of a resin. The base material B has a substantially rectangular shape, with the X direction as a short-side direction and the Y direction as a long-side direction, in a plan view. A through hole Th penetrating the base material B is provided at a substantially central part of the base material B in a plan view. The through hole Th has a circular shape in a plan view. A region of the base material B located at the negative side in the Y direction with respect to the through hole Th is attached to the bottom surface Rb of the recessed part R in a state of being fitted into the recessed part R of the flexure element 11 (FIGS. 2, 3(a), and 3(b)). By providing the recessed part R and fitting a part of the base material B into the recessed part in this manner, the flexure element 11 and the base material B can be easily positionally aligned. Therefore, the flexure element 11 and the strain gauges SG_{X1}, SG_{X2}, SG_{Y1}, and SG_{Y2} described below can also be easily positionally aligned.

The strain gauges SG_{X1}, SG_{X2}, SG_{Y1}, and SG_{Y2} are provided in a region (that is, a region attached to the flexure element 11) located at the negative side in the Y direction with respect to the through hole Th on a lower surface of the base material B (that is, a surface opposite to the upper surface of the base material B attached opposing the flexure element 11).

Each of the strain gauges SG_{X1}, SG_{X2}, SG_{Y1}, and SG_{Y2} according to the present embodiment includes a strain sensing part (not illustrated) including a linear resistor (not illustrated) folded back in a zigzag manner. The strain gauges SG_{X1} and SG_{X2} are disposed so that a grid direction of the strain sensing parts (an extending direction of a linear part of the zigzag linear resistor, that is, a strain sensing direction) is parallel to the X direction. The strain gauge SG_{Y1} and the strain gauge SG_{Y2} are disposed so that the grid direction of the strain sensing parts is parallel to the Y direction. According to this arrangement, the strain gauges SG_{X1} and SG_{X2} detect strain of the flexure element 11 in the X direction. The strain gauges SG_{Y1} and SG_{Y2} detect strain of the flexure element 11 in the Y direction. Therefore, a strain detection direction of the pointing device 100 (a direction for detecting an operation amount by the operator) is the X direction and the Y direction (and a direction obtained by combining these direction components).

The four tabs T are provided in a region of the lower surface of the base material B located at the positive side in the Y direction with respect to the through holes Th (that is, a region not attached to the flexure element 11). The four tabs T each have a rectangular shape in a plan view and are connected to the strain gauges SG_{X1}, SG_{X2}, SG_{Y1}, and SG_{Y2} by wiring (not illustrated) formed on the base material BB. The shape of the tab T is not limited to the illustrated shape. For example, the tab T may have a circular or elliptical shape.

The positional relationship between the respective parts of the main body 10 and the respective parts of the strain sensor 20 is as follows (FIGS. 3(a) and 3(b)).

In a plan view, the operation part 12 is located at an inner side of the strain gauges SG_{X1}, SG_{X2}, SG_{Y1}, and SG_{Y2} of the strain sensor 20 attached to the flexure element 11 (for example, substantially at the center of these strain gauges). The first leg 131 is located at the positive side in the X direction of the strain gauges SG_{X1}, SG_{X2}, SG_{Y1}, and SG_{Y2}, the second leg 132 is located at the negative side in the X direction, the protruding part 14 is located at the positive side in the Y direction, and the third leg 133 is located at the negative side in the Y direction. That is, the strain gauges SG_{X1}, SG_{X2}, SG_{Y1}, and SG_{Y2} are sandwiched between the first leg 131 and the second leg 132 in the X direction and are sandwiched between the protruding part 14 and the third leg 133 in the Y direction.

The protruding part 14 of the main body 10 is located in the through hole Th of the base material B of the strain gauge 20. When attaching the strain gauge 20 to the flexure element 11, the flexure element 11 and the strain gauges SG_{X1}, SG_{X2}, SG_{Y1}, and SG_{Y2} can be easily positionally aligned by using the fitting of the protruding part 14 of the main body 10 and the through hole Th of the strain gauge 20 as a reference.

The support plate 30 is a member for supporting the main body 10 and is a member for attaching the pointing device 100 to an attachment target device (a personal computer, a game machine, or the like). The support plate 30 may be formed of, for example, a metal (as an example, stainless steel).

The support plate 30 is a substantially flat plate extending in a plane including the X direction and the Y direction. In the present embodiment, the support plate 30 has a square shape in a plan view. However, the shape of the support plate 30 is not limited to this shape and may be appropriately changed in accordance with the specification, shape, and the like of the attachment target. For example, the support plate 30 may have various shapes such as a rectangular shape, a circular shape, or an elliptical shape in a plan view.

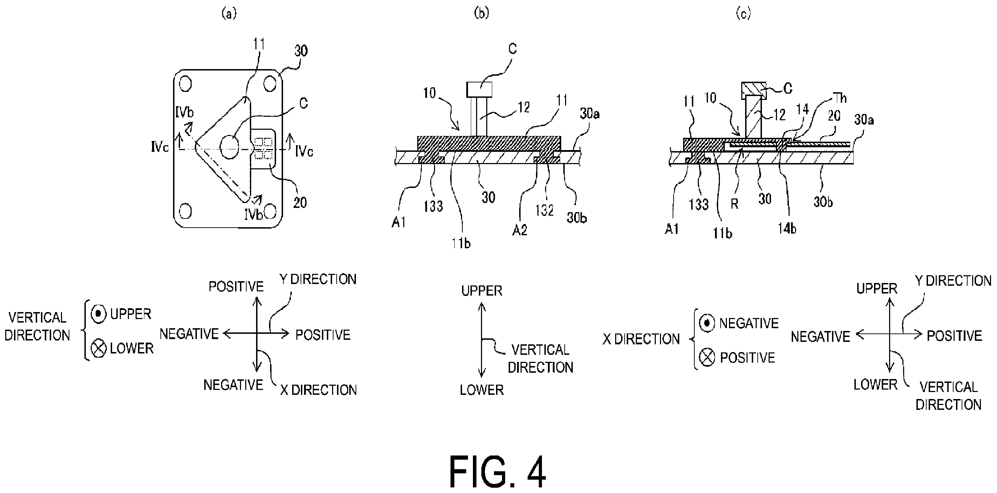

As illustrated in FIG. 1, three openings A1 are provided in a substantially central part of the support plate 30. Each of the three openings A1 is an opening for fixing the main body 10. Each of the three openings A1 has a circular shape in a plan view. Each of the three openings A1 is a stepped hole, with a diameter in the vicinity of a lower surface 30b being larger than a diameter in the vicinity of an upper surface 30a (FIGS. 4(b) and 4(c)).

In the present embodiment, as an example, as illustrated in FIG. 1, an opening A2 is provided at each of four corners of the support plate 30. The number of openings A2 is not limited. Each of the four openings A2 is an opening for attaching the support plate 30 (and further the pointing device 100) to a device as an attachment target (i.e., an attachment target device). In the present embodiment, the four openings A2 have a circular shape in a plan view. However, each of the openings A1 and A2 may have a shape of a screw hole for receiving a screw part.

As illustrated in FIGS. 2, 4(b), and 4(c), the main body 10 is fixed to the support plate 30. Specifically, each of the first leg 131, the second leg 132, and the third leg 133 of the main body 10 is inserted, welded, and fixed in the opening A1 of the support plate 30 (FIGS. 4(b) and 4(c)). The lower end parts of the first leg 131, the second leg 132, and the third leg 133 are deformed by welding and fill the inside of the openings A1 without protruding downward from the lower surface 30b of the support 30.

In a state where the main body 10 is fixed to the support plate 30, a region except the recessed part R of the lower surface 11b of the flexure element 11 and the lower surface 14b of the protruding part 14 are in contact with the upper surface 30a of the support plate 30. In an aspect where the recessed part R is not provided in the lower surface 11b of the flexure element 11, the entire region of the lower surface 11b may be disposed with a gap with respect to the upper surface 30a of the support plate 30. Also in this case, the lower surface 14b of the protruding part 14 is in contact with the upper surface 30a of the support plate 30.

The pointing device 100 is fixed to a housing, a substrate, or the like of an attachment target device of the pointing device 100 by screwing or the like through the openings A2 of the support plate 30. The strain gauges SG_{X1}, SG_{X2}, SG_{Y1}, and SG_{Y2} are connected to an electrical configuration of the above-described attachment target device via the tabs T of the strain sensor 20. This configures, for example, a Wheatstone bridge including the strain gauges SG_{X1} and SG_{X2} and a resistor outside the pointing device 100 and a Wheatstone bridge including the strain gauges SG_{Y1} and SG_{Y2} and a resistor outside the pointing device 100.

When the operator operates the operation part 12 via the cap C (that is, when the operator applies a load to the operation part 12), a strain corresponding to the magnitude and direction of the load applied to the operation part 12 by the operator is generated in the flexure element 11. The pointing device 100 detects the magnitude of the strain generated in the flexure element 11 by the strain sensor 20 to obtain an operation amount input by the user. Specifically, an operation amount in the X direction is obtained using the Wheatstone bridge including the strain gauges SG_{X1} and SG_{X2}, and an operation amount in the Y direction is obtained using the Wheatstone bridge including the strain gauges SG_{Y1} and SG_{Y2}. The pointing device 100 inputs the obtained operation amount to a device with the pointing device 100 mounted thereon (that is, an attachment target device). The pointing device 100 may calculate an operation amount in a direction obtained by combining the components in the X direction and the Y direction (that is, any direction of 360 degrees on the XY plane) and input the operation amount to the attachment target device.

The advantageous effects of the pointing device 100 of the present embodiment are summarized below.

The pointing device 100 of the present embodiment supports the flexure element 11 having a triangular shape in a plan view by using the first legs 131, the second legs 132, and the third legs 133 respectively provided at the three top parts V1, V2, and V3 of the flexure element 11. Therefore, the flexure element 11 has a small region located outside a contour defined by connecting the first leg 131, the second leg 132, and the third leg 133 and is compact and space-efficient.

The compactness of the flexure element 11 is particularly advantageous when attaching the pointing device 100 to various devices. That is, a notebook computer or a game machine as an attachment target device of the pointing device 100 is required to be reduced in size, and a space capable of being used for installing the pointing device 100 inside the notebook computer or game machine is limited. In this regard, by forming the flexure element 11 of the pointing device 100 in a compact and space-efficient shape, the pointing device 100 can be installed compactly and efficiently inside the attachment target device of the pointing device 100.

In the pointing device 100 of the present embodiment, the first leg 131 and the second leg 132 are provided at both sides in the X direction of the strain gauges SG_{X1}, SG_{X2}, SG_{Y1}, and SG_{Y2}. The third leg 133 and the protruding part 14 are provided at both sides in the Y direction of the strain gauges SG_{X1}, SG_{X2}, SG_{Y1}, and SG_{Y2}. By providing the members for restricting movement of the flexure element 11 at both sides in the X direction and both sides in the Y direction of the strain gauges SG_{X1}, SG_{X2}, SG_{Y1}, and SG_{Y2} in this manner, the mode of the strain generated in the flexure element 11 can be homogenized in the X direction and the Y direction. This can improve the accuracy of strain detection using the strain sensor 20.

In the pointing device 100 of the present embodiment, the protruding part 14 is disposed at the position side in the Y direction with respect to the first leg 131 and the second leg 132. In other words, the protruding part 14 of the pointing device 100 of the present embodiment is disposed at the opposite side to a side where the strain gauges SG_{X1}, SG_{X2}, SG_{Y1}, and SG_{Y2} are disposed in the Y direction while sandwiching the reference line connecting the first leg 131 and the second leg 132. With such an arrangement, in the pointing device 100, a distance in the Y direction between the third leg 133 and the protruding part 14 can be increased. This can further homogenize the mode of strain generated in the flexure element 11 in the X direction and the Y direction and further improve the accuracy of strain detection using the strain sensor 20.

In the pointing device 100 of the present embodiment, the protruding part 14 is not fixed to the support plate 30. Therefore, the work of welding the protruding part 14 to the support plate 30 is not required, and the main body 10 can be fixed to the support plate 30 with less labor.

### Modifications

In the pointing device 100 of the embodiment described above, the following modified aspects can also be used.

In the pointing device 100 according to the embodiment described above, the shape of the flexure element 11 in a plan view is an isosceles triangle but is not limited to this shape. The shape of the flexure element 11 in a plan view may be any triangle such as an equilateral triangle or a right triangle.

As described in the above embodiment, the pointing device 100 may be configured so that the flexure element 11 has a shape of an isosceles triangle, a direction of a base of the isosceles triangle is matched with one of the X direction and the Y direction (that is, one of the two strain detection directions), and a direction orthogonal to the base is matched with the other of the X direction and the Y direction (that is, the other of the two strain detection directions). This can homogenize the mode of strain generated in the flexure element 11 in the X direction and the Y direction and further improve the accuracy of strain detection using the strain sensor 20.

Alternatively, the pointing device 100 may be configured so that the flexure element 11 has a shape of an equilateral triangle, a direction of one side of the equilateral triangle is matched with one of the X direction and the Y direction (that is, one of the two strain detection directions), and a direction orthogonal to the one side is matched with the other of the X direction and the Y direction (that is, the other of the two strain detection directions). This can homogenize the mode of strain generated in the flexure element 11 in the X direction and the Y direction and further improve the accuracy of strain detection using the strain sensor 20.

In the pointing device 100 of the embodiment described above, the operation part 12 is a quadrangular prism, and the first leg 131, the second leg 132, the third leg 133, and the protruding part 14 are columns. However, no such limitation is intended. The operation part 12 may have any shape such as a column, a cylinder, or a triangular prism. The first leg 131, the second leg 132, the third leg 133, and the protruding part 14 may have any shape such as a cylindrical shape, a quadrangular prism shape, or a triangular prism shape.

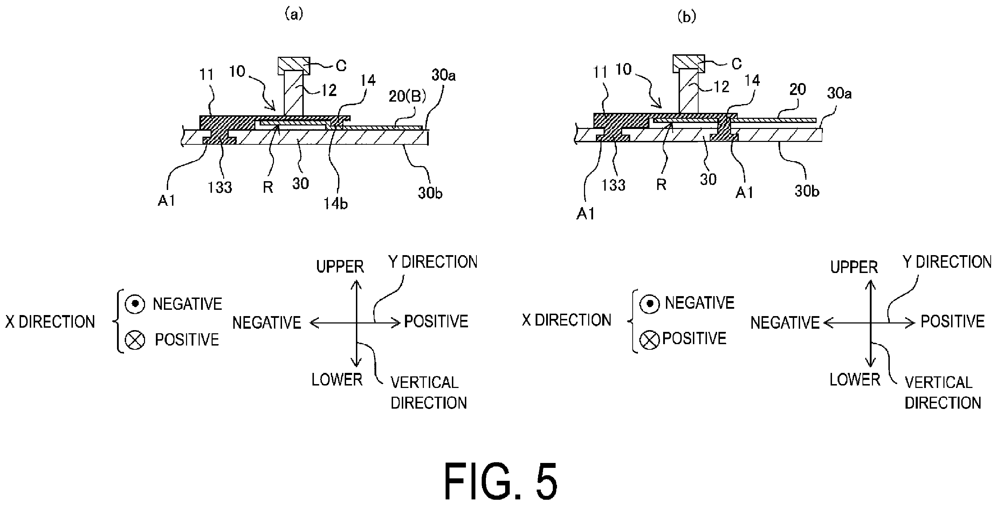

In the pointing device 100 of the embodiment described above, the through hole Th is provided in the base material B of the strain sensor 20, and in a state where the main body 10, the strain sensor 20, and the support plate 30 are integrally combined, the protruding part 14 of the main body 10 passes through the through hole Th of the base material B and is in contact with the support plate 30. However, no such limitation is intended. Specifically, for example, the through hole Th of the base material B may be omitted, and the base material B may be sandwiched between the lower surface 14b of the protruding part 14 and the upper surface 30a of the support plate 30, as illustrated in FIG. 5(a).

In the pointing device 100 of the embodiment described above, in the state where the main body 10, the strain sensor 20, and the support plate 30 are integrally combined, the lower surface 14b of the protruding part 14 of the main body 10 is in contact with the upper surface 30a of the support plate 30. However, no such limitation is intended. Specifically, for example, as illustrated in FIG. 5(b), the protruding part 14 may be welded and fixed to the support plate 30, similarly to the first leg part 131 to the third leg part 133. In this case, the size of the protruding part 14 in the vertical direction is increased, and the opening A1 is provided at a position corresponding to the protruding part 14 of the support plate 30.

In the pointing device 100 of the embodiment described above, the protruding part 14 of the main body 10 is located at the center position between the first leg 131 and the second leg 132 in the X direction. However, no such limitation is intended. The protruding part 14 may be provided at any position in the X direction.

In the pointing device 100 of the embodiment described above, the protruding part 14 of the main body 10 is located at the positive side in the Y direction with respect to the first leg 131 and the second leg 132. However, no such limitation is intended. The protruding part 14 may be located at the same position as the first leg 131 and the second leg 132 in the Y direction, or may be located at the negative side of the first leg 131 and the second leg 132 in the Y direction.

In the pointing device 100 of the embodiment described above, the main body part 10 may be configured so that the center position between the first leg 131 and the second leg 132 is matched with the center position between the strain gauge SG_{X1} and the strain gauge SG_{X2} in the X direction. This can further accurately detect the strain generated in the flexure element 11 in the X direction. In the pointing device 100 of the embodiment described above, the main body part 10 may be provided so that the center position between the protruding part 14 and the third leg 133 is matched with the center position between the strain gauge SG_{Y1} and the strain gauge SG_{Y2} in the Y direction. This can further accurately detect the strain generated in the flexure element 11 in the Y direction.

In the pointing device 100 of the embodiment described above, the protruding part 14 may be omitted. In this case, in order to homogenize the mode of the strain generated in the flexure element 11 in the X direction and the Y direction, a thickness (a dimension in the vertical direction) of the flexure element 11 may be changed in a plane including the X direction and the Y direction, as necessary.

The pointing device 100 of the embodiment described above uses the strain sensor 20 including the four strain gauges SG_{X1}, SG_{X2}, SG_{Y1}, and SG_{Y2} integrally provided on the base material B, but no such limitation is intended. The strain gauges SG_{X1}, SG_{X2}, SG_{Y1}, and SG_{Y2} may be four strain gauges separated from each other. At least one strain gauge for detecting the strain in the X direction and at least one strain gauge for detecting the strain in the Y direction may be attached to the flexure element 11.

In the pointing device 100 of the embodiment described above, the strain gauge 20 is pulled out to the outside of the flexure element 11 through the space between the first leg 131 and the second leg 132 of the main body part 10. However, no such limitation is intended. The strain gauge 20 may be pulled out to the outside of the flexure element 11 through the space between the second leg 132 and the third leg 133 of the main body part 10, or may be drawn out to the outside of the flexure element 11 through the space between the third leg 133 and the first leg 131 of the main body part 10. The strain gauge 20 itself may be sized to fit between the flexure element 11 and the support plate 30, and the wiring pulled out from the strain gauge 20 may be pulled out to the outside of the flexure element 11 and connected to an electrical configuration (a circuit or the like) of the attachment device of the pointing device 100.

In the pointing device 100 of the embodiment described above, the support plate 30 may be omitted. In this case, the first leg 131 to the third leg 133 of the main body 10 is fixed to a part of an attachment target device of the pointing device 100 (for example, a substrate embedded in the attachment target device). In this case, the part of the attachment target device corresponds to a "support" of the present invention.

As long as the features of the present invention are maintained, the present invention is not limited to the embodiment described above, and other forms considered within the scope of the technical concept of the present invention are also included within the scope of the present invention.

### Reference Signs List

10: main body, 11: flexure element, 12: operation part, 131: first leg, 132: second leg, 133: third leg, 14: protruding part, 20: strain sensor, 30: support plate, 100: pointing device, A1, A2: opening, SG_{X1}, SG_{X2}, SG_{Y1}, SG_{Y2}: strain gauge, Th: through hole

## Claims

1. A pointing device detecting at least an operation amount in a first direction and an operation amount in a second direction orthogonal to the first direction, the pointing device comprising:
a flexure element extending in a plane including the first direction and the second direction and having a plate shape;
an operation part operated by an operator and extending from the flexure element to one side in a third direction orthogonal to the first direction and orthogonal to the second direction;
three legs extending from the flexure element to the other side in the third direction and fixed to a support supporting the flexure element;
a first strain gauge attached to the flexure element and configured to detect the operation amount in the first direction;
a second strain gauge attached to the flexure element and configured to detect the operation amount in the second direction, wherein
the flexure element has a triangular shape when viewed in the third direction, and
the three legs are provided at respective three top parts of the flexure element.

2. The pointing device according to claim 1, wherein
the flexure element has a shape of an isosceles triangle when viewed in the third direction, and
a base of the isosceles triangle is disposed parallel to the first direction, or
the flexure element has a shape of an equilateral triangle when viewed in the third direction, and
one side of the equilateral triangle is disposed parallel to the first direction.

3. The pointing device according to claim 1 or 2, further comprising
a protruding part extending from the flexure element to the other side in the third direction and comprising an end part supported on a surface of the support opposing the flexure element, wherein
the three legs comprise a first leg, a second leg, and a third leg,
the first leg and the second leg are disposed sandwiching the first strain gauge and the second strain gauge in the first direction, and
the third leg and the protruding part are disposed sandwiching the first strain gauge and the second strain gauge in the second direction.

4. The pointing device according to claim 1 or 2, further comprising
a protruding part extending from the flexure element to the other side in the third direction and fixed to the support, wherein
the three legs comprise a first leg, a second leg, and a third leg,
the first leg and the second leg are disposed sandwiching the first strain gauge and the second strain gauge in the first direction, and
the third leg and the protruding part are disposed sandwiching the first strain gauge and the second strain gauge in the second direction.

5. The pointing device according to claim 3 or 4, wherein in the second direction, the protruding part is disposed at a side opposite to a side where the first strain gauge and the second strain gauge are disposed while sandwiching a reference line connecting the first leg and the second leg.

6. The pointing device according to any one of claims 3 to 5, wherein the third leg, the protruding part, and the second strain gauge are disposed at the same position in the first direction.

7. The pointing device according to any one of claims 3 to 6, further comprising
a strain sensor comprising a base material including the first strain gauge and the second strain gauge formed on the base material, wherein
a through hole is provided in the base material of the strain sensor, and
the protruding part is disposed in the through hole.

8. The pointing device according to claim 3, further comprising
a strain sensor comprising a base material, the first strain gauge and the second strain gauge being formed on the base material, wherein
the base material is sandwiched between the protruding part and the support.

9. The pointing device according to any one of claims 1 to 8, wherein the support is a support plate attached to an attachment target device of the pointing device while supporting the flexure element.
